# EUROPEAN PATENT SPECIFICATION

(11) **EP 2 732 890 B1**
(45) Date of publication and mention of the grant of the patent: **16.08.2017**
(21) Application number: 13192670.1
(22) Date of filing: 13.11.2013
(51) Int. Cl.: B22F 3/105, B29C 67/00

(54) **A machine for making three-dimensional objects from powdered materials**
Maschine zur Herstellung dreidimensionaler Objekte aus pulverförmigen Materialien
Machine de fabrication d'objets tridimensionnels à partir de matériaux en poudre

(30) Priority: 20.11.2012 IT VR20120231
(43) Date of publication of application: 21.05.2014
(73) Proprietor: Trumpf Sisma S.r.l., 36013 Piovene di Rocchette (VI) (IT)
(72) Inventor: MICHELETTO, Dino, Quinto Vicentino (Vicenza) (IT)
(74) Representative: Lissandrini, Marco

(56) References cited:
- EP-A2- 1 704 989
- EP-B1- 0 946 325
- WO-A1-93/08928
- WO-A1-2004/056509
- DE-A1-102009 020 987
- DE-A1-102010 020 416
- DE-U1-202010 005 162
- US-A1- 2007 026 099
- US-A1- 2010 090 374

## Description

This invention relates to a machine for making three-dimensional objects from powdered materials. In particular, this invention belongs to the industrial sector of laser sintering of powdered materials for creating three-dimensional objects.

As is known, the sintering process consists of transforming powdered material into a solid end product, by means of a thermal treatment carried out by irradiating the powder with a laser beam for a predetermined period of time, until the granules of powder have fused together.

Laser sintering is used in many industrial sectors for making objects, even with complex shapes, in a rapid way, more economical than normal metal fusion processes. Laser sintering is applied in particular in the sector of jewellery and dental prostheses, as well as in the technical field of prototype production.

It is known that a machine for laser sintering of powdered materials comprises the following mechanical parts:
- a working surface in which a growing cavity is made;
- a platform for growing the end product, slidably inserted in the growing cavity and movable between a plurality of different positions;
- depositing means for distributing a thin layer of powder on the growing platform;
- a laser focused on the zones covered by the layer of powder, until the granules of powder have fused together.

According to the prior art, document EP946325 describes a method for making an object by depositing, one after another, layers of powdered materials on a growing platform. In particular, the method comprises depositing a first layer of powder on the growing platform and focusing a laser beam on predetermines zones of said layer, until a temperature is reached which is suitable for causing the granules of powder to fuse together, before depositing the next layer.

Precisely, the sintering process is normally carried out as follows:
- lowering of the growing platform relative to the working surface;
- filling the area present between the growing platform and the working surface in such a way as to achieve levelling of the layer of powder with the working surface;
- passage with the laser over the zones covered by the layer of powder;
- repetition of lowering of the platform, filling and of passage of the laser until a three-dimensional object has been formed.

Moreover, the laser beam is guided on each layer of powder according to the instructions sent by a processing unit. In particular, the processing unit sends the instructions based on a three-dimensional CAD model of the object to be made, in such a way that the granules of powder of each layer are fused with the granules of powder of the layer below.

Hereinafter the area present between the growing platform and the working surface shall be referred to as the "growing space". In use, the growing space increases during the sintering process due to the lowering of the growing platform.

However, this prior art technique has several disadvantages.

In fact, the method comprises filling the growing space with powdered materials irrespective of the dimensions of the object to be made. In other words, the object to be made could have dimensions much smaller than the growing space defined at the end of the sintering process.

Therefore, to make the three-dimensional object it is often necessary to use a quantity of powdered materials which is much greater than that necessary for making the object. In fact, according to the prior art, the quantity of powdered materials is only linked to the dimensions of the growing space.

In that way, to make an object it is often necessary to have a quantity of powder which is much larger than the quantity of powder needed for the fusion to form the object. That subject becomes even more relevant if the machine is produced for making valuable objects such as dental prostheses or jewellery made of precious material. In fact, in such cases, the powdered materials are very expensive, and the use of a lot of powder can lead to a considerable increase in the final costs of the object made.

It should also be noticed that at the end of the sintering process, the remaining powder present in the growing space (in which the object made is immersed) can only be recovered after it has undergone a sieving process to eliminate agglomerated particles. In other words, recovery of the remaining powder is time consuming and expensive.

Other examples of prior art are disclosed in document US2007/026099 in which a second container is configured to be inserted in a first building container in order to reduce the manufacturing region. Document DE102010020416 discloses means for modifying the building space in a three dimensional manufacturing machine. Document DE102009020987 shows a reducing element of the building container mounted on the top working surface of a three dimensional manufacturing machine.

In this situation, the aim of this invention is to provide a machine which overcomes the above-mentioned disadvantages.

In particular, the aim of this invention is to provide a machine which allows the variation of the quantity of powdered materials to be used for sintering depending on the dimensions of the object to be made.

It is also the aim of this invention to reduce wasted remaining powder in the growing space after the sintering process.

Finally, this invention has for an aim to reduce the costs of making objects, in particular valuable objects, obtained by means of sintering. The aims indicated are substantially achieved by a machine for making three-dimensional objects from powdered materials as described in the appended claims.

Further features and the advantages of this invention are more apparent from the detailed description which follows of a preferred but non-limiting embodiment of a machine for making three-dimensional objects from powdered materials as illustrated in the accompanying drawings, in which:
- Figure 1 is an axonometric view of a machine according to this invention in a first operating condition;
- Figure 2 is an axonometric view of the machine of Figure 1 in a second operating condition;
- Figure 3 is an axonometric top view of a detail of the machine of Figure 1;
- Figure 4 is an axonometric bottom view of the detail illustrated in Figure 3;
- Figure 5 is a front view of a cross-section of the detail illustrated in Figure 3;
- Figure 6 is a front view of a detail of the detail illustrated in Figure 3;
- Figure 7 is an axonometric enlarged bottom view of the detail illustrated in Figure 6; and
- Figure 8 is an axonometric view of a cross-section of a detail of the machine illustrated in Figure 2.

With reference to the accompanying drawings, the numeral 1 denotes in its entirety a machine for making three-dimensional objects from powdered materials in accordance with this invention.

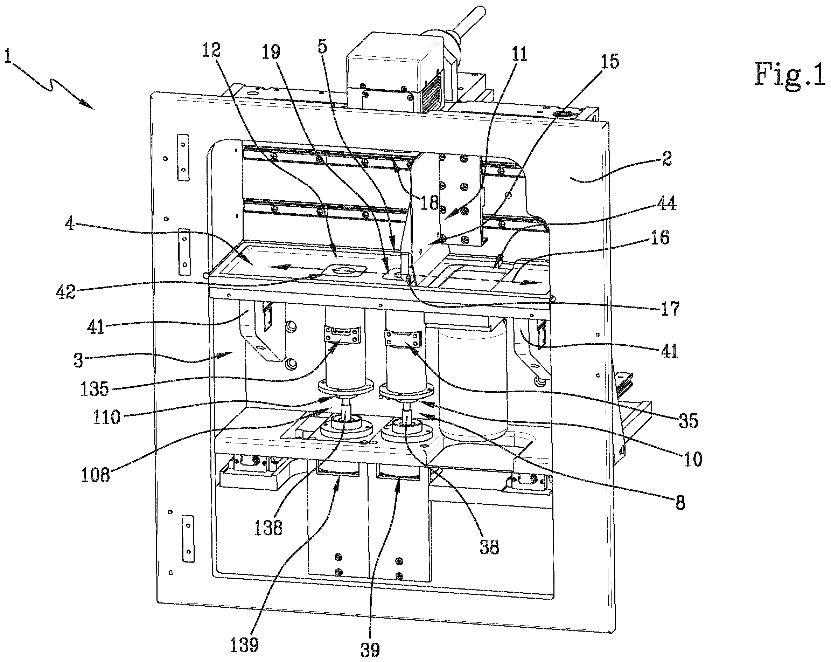

As shown in Figure 1, the machine 1 comprises a supporting structure 2 on which a main body 3 is mounted. The main body 3 comprises a working surface 4 in which cavities are made. Preferably, the working surface 4 is at least mainly flat so as to favour the movement of the powdered materials from one cavity to another.

Precisely, the main body 3 comprises a growing cavity 5 extending along a main direction of extension 6. In the preferred embodiment illustrated in the accompanying drawings, the main direction of extension 6 is transversal, preferably orthogonal, to the working surface 4. Advantageously, the growing cavity 5 forms, inside it, a growing space in which the three-dimensional object to be made is produced.

In particular, the machine 1 comprises a growing platform 7 for growing the object to be produced, slidably inserted in the growing cavity 5 of the main body 3 and movable along the main direction of extension 6 between a plurality of operating positions. In other words, the growing space is the area between the growing platform 7 and the working surface 4. In other words, the growing space is variable during use of the machine 1 depending on the movements of the growing platform 7.

Moreover, the machine 1 comprises movement means 8 suitably connected to the growing platform 7 for moving it.

As is explained in more detail below, the movement means 8 comprise a supporting portion 9 extending inside the growing cavity 5 and release means 10 interposed between the supporting portion 9 and the rest of the movement means 8 for releasing the supporting portion 9 relative to the movement means 8. The growing platform 7 is fixed to the supporting portion 9 for moving the growing platform 7.

Moreover, the machine 1 comprises depositing means 11 operatively associated with the growing cavity 5 for depositing a succession of layers of powdered materials on the growing platform 7.

In particular, as shown in Figure 1, the depositing means 11 comprise a containment cavity 12 for the powdered materials which is made in the main body 3. It is now clear that the two cavities initially mentioned are the growing cavity 5 and the containment cavity 12.

Preferably, the containment cavity 12 extends along a principal direction of extension 13. Said principal direction of extension 13 is substantially parallel with the main direction of extension 6. In other words, the growing cavity 5 and the growing cavity 5 are made one after another along the working surface 4. Precisely, the growing cavity 5 and the growing cavity 5 are positioned one after another along the working surface 4 in a working direction transversal to the principal direction of extension 13. In the preferred embodiment, the growing cavity 5 and the growing cavity 5 are positioned one after another along the working surface 4 in a working direction perpendicular to the principal direction of extension 13. Moreover, the depositing means 11 comprise a containment platform 14 for containing the powdered materials, slidably inserted in the containment cavity 12 of the main body 3 and movable between a plurality of operating positions. In particular, the containment platform 14 is movable parallel with the main direction of extension 6 between a plurality of operating positions.

Advantageously, the containment cavity 12 forms a containment space in which the powdered materials to be sintered are stored.

In other words, the containment space is the area between the containment platform 14 and the working surface 4. In yet other words, the containment space is variable during use of the machine 1 depending on the movements of the containment platform 14.

Precisely, during operation of the machine 1, the containment platform 14 moves towards the working surface 4, whilst the growing platform 7 moves away from the working surface 4. In other words, during operation of the machine 1, the containment space is reduced whilst the growing space is increased.

Moreover, the depositing means 11 comprise movement means 108 for moving the containment platform 14.

As is explained in more detail below, the movement means 108 of the containment platform 14 comprise a supporting portion 109 extending inside the containment cavity 12 and release means 110 interposed between the supporting portion 109 and the rest of the movement means 108 for releasing the supporting portion 109 relative to the movement means 108. The containment platform 14 is fixed to the supporting portion 109 for moving the containment platform 14.

Moreover, the depositing means 11 comprise a trowel 15 movable from the containment cavity 12 to the growing cavity 5, along a direction of movement 16 transversal to the main direction of extension 6, for transferring the powdered materials from the containment cavity 12 to the growing cavity 5. Preferably, the trowel 15 moves along a direction of movement 16 perpendicular to the main direction of extension 6. Furthermore, as can be seen in Figure 1, the trowel 15 extends on the working surface 4 and covers the entire width of the two cavities measured transversely to the direction of movement 16 of the trowel 15. Moreover, the trowel 15 comprises a flexible portion 17 in contact with the working surface 4. In that way, during operation of the machine 1, the containment platform 14 moves towards the working surface 4 in such a way as to make a predetermined quantity of powdered materials come out, and the passage of the trowel 15 transfers the powdered materials into the growing cavity 5.

The trowel 15 is not described in more detail below, since it is of the type known in the sector.

Moreover, the machine 1 comprises an electromagnetic radiation device 18 operatively associated with the growing platform 7 and designed for focusing a beam of electromagnetic radiation on predetermined zones of each layer of deposited powder until joining together of the granules of powdered materials is achieved. In particular, the electromagnetic radiation device 18 is connected to the supporting structure 2 of the machine 1 and is facing the growing cavity 5. Precisely, the electromagnetic radiation device 18 is facing the growing cavity 5 on the working surface 4 side. Moreover, the electromagnetic radiation device 18 is spaced from the growing cavity 5 in a direction defined by the continuation of the main direction of extension 6 above the working surface 4. Said electromagnetic radiation device 18 comprises a focusing system using lenses for improving the directing and concentration of the laser beam on the layers of powdered materials.

Preferably, the electromagnetic radiation device 18 is a laser device.

The electromagnetic radiation device 18 is not described in more detail below, since it is of the type known in the sector.

According to this invention, the machine 1 comprises an annular base body 19 which can be operatively associated with the growing cavity 5 of the main body 3 for forming a narrowing of the growing cavity 5. The growing platform 7 is interchangeable for adapting to the narrowing of the growing cavity 5.

In other words, the annular base body 19 is formed by its lateral wall which has a predetermined thickness. Said thickness of the lateral wall defines the narrowing of the growing cavity 5.

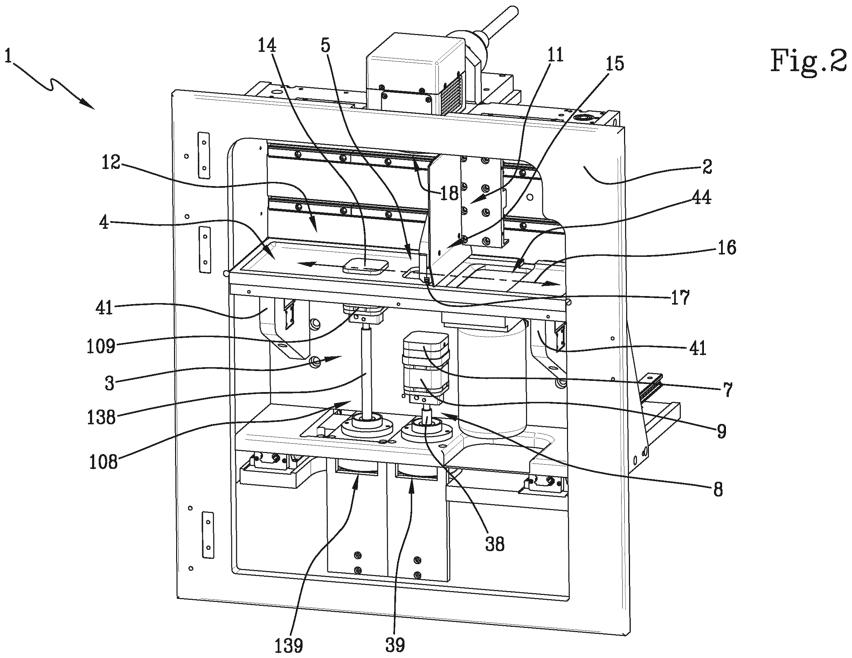

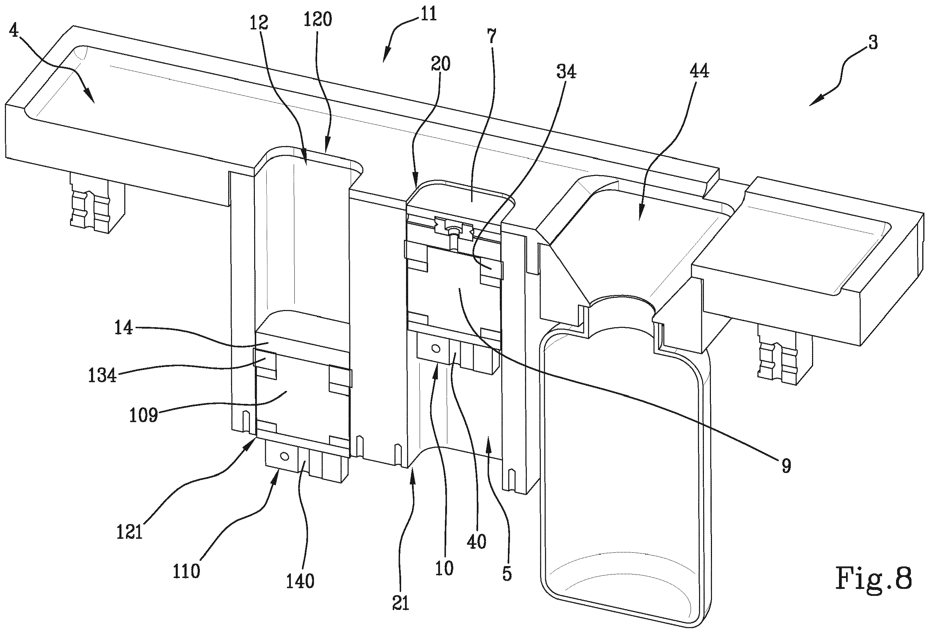

In particular, the machine 1 is configurable between a first operating condition in which the annular base body 19 is inserted in the growing cavity 5 (Figures 1, 3 - 6) and a second operating condition in which the annular base body 19 is removed from the growing cavity 5 (Figures 2 and 8). In particular, the growing cavity 5 comprises an inner surface and the annular body comprises an outer surface which is shaped to match the inner surface of the growing cavity 5.

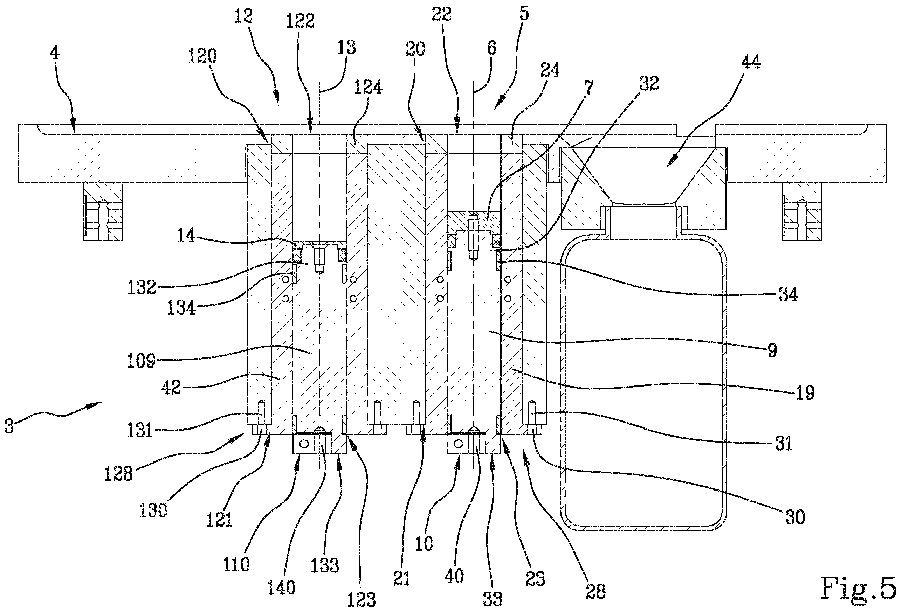

In that way, during the first operating condition, the outer surface of the annular body is in contact with the inner surface of the growing cavity 5 (Figure 5).

Preferably, the interchangeable growing platform 7 is shaped to match the growing cavity 5 of the main body 3 or the narrowing of the growing cavity 5 depending on the machine 1 operating condition.

For example, if the machine 1 is in the first operating condition the growing platform 7 is shaped to match an inner surface of the annular base body 19 (Figure 5). If the machine 1 is in the second operating condition the growing platform 7 is shaped to match the growing cavity 5 (Figure 8).

It should be noticed that the interchangeable growing platform 7 is shaped to match the growing cavity 5 of the main body 3 or the narrowing of the growing cavity 5 with reference to a direction orthogonal to the main direction of extension 6. In other words, the interchangeable growing platform 7 adheres laterally to the inner surface of the growing cavity 5 or to the inner surface of the annular base body 19 in such a way as to avoid the passage of powdered materials from the growing platform 7 to a rear part of it.

Moreover, Figures 5 and 8 show how the growing cavity 5 of the main body 3 forms a channel passing through the main body 3 and extending along the main direction of extension 6 between an inlet end 20 of the powdered materials and a mounting end 21 for mounting the annular base body 19, opposite to the inlet end 20. In particular, the inlet end 20 of the growing cavity 5 is positioned at the working surface 4 and is level with it. It should be noticed that the annular base body 19 is inserted in the growing cavity 5 through the mounting end 21 during the passage from the second operating condition to the first operating condition.

Similarly, the annular base body 19 forms an internal through channel extending from an inlet opening 22 for the powdered materials and a connection opening 23 for the movement means 8. In that way, during the first operating condition, the inlet opening 22 is positioned at the inlet end 20 of the growing cavity 5, and the connection opening 23 is positioned at the mounting end 21 of the growing cavity 5.

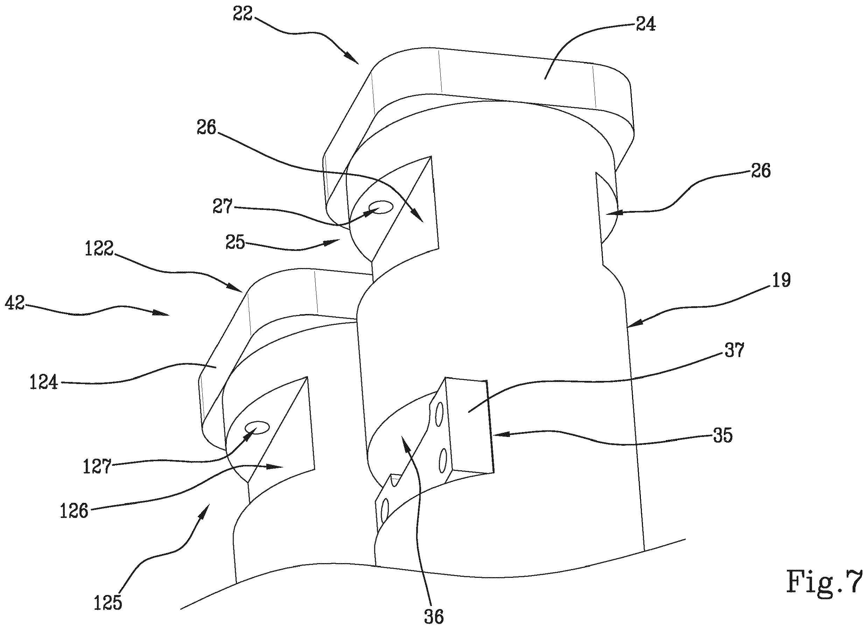

In addition, the annular base body 19 comprises a pierced upper apron 24 forming the inlet opening 22. Preferably, said apron 24 is shaped to match the growing cavity 5. In addition, the apron 24 is connected to the rest of the annular base body 19 by connecting means 25 (Figure 7). The connecting means 25 comprise at least one hollow 26 made in the outer surface of the annular base body 19, at least one connecting hole 27 extending from the hollow 26 towards the inlet opening 22 and at least one connecting screw which is screwed into the connecting hole for connecting the apron 24 to the rest of the annular body.

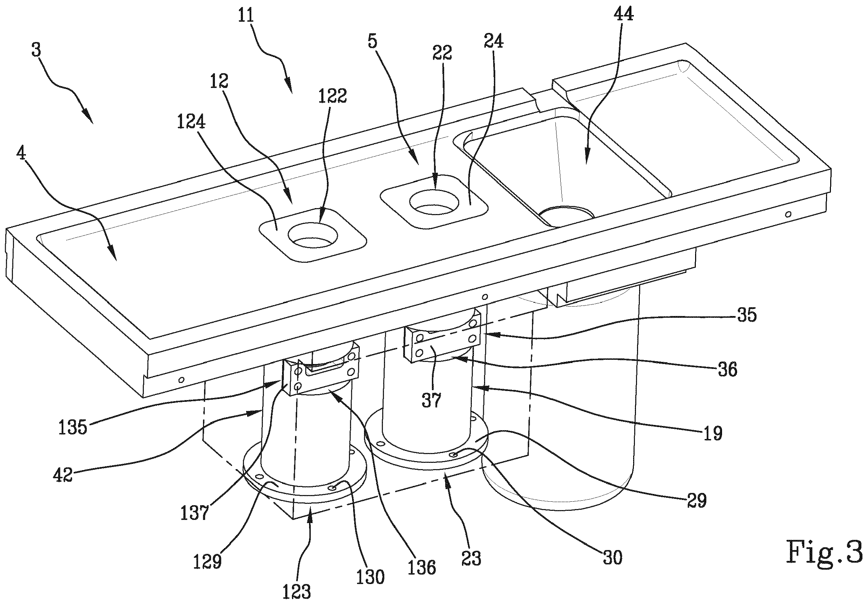

Moreover, the machine 1 comprises fastening means 28 interposed between the annular base body 19 and the main body 3 for fixing the annular base body 19 to the main body 3. Preferably, as shown in Figure 3, the fastening means 28 comprise a flange 29 of the annular base body 19 formed at the connection opening 23. Said flange 29 extends outwards from the annular base body 19 relative to the main direction of extension 6.

Moreover, the flange 29 comprises a plurality of through holes 30 (part of the fastening means 28) and the main body 3 comprises respective threaded holes 31 (part of the fastening means 28) which, in use, are aligned with the through holes of the flange 29. In other words, the threaded holes 31 are aligned with the through holes 30 of the flange 29 during the first operating condition. In addition, the fastening means 28 comprise screws which can be inserted in the through holes 30 of the flange 29 and screwed into the threaded holes 31 of the main body 3 for connecting the annular base body 19 to the main body 3.

Moreover, the movement means 8 comprise a supporting portion 9 of the growing platform 7 extending in the growing cavity 5 through the mounting end 21 and connected to the rest of the movement means 8 for transmitting motion to the growing platform 7. In particular, as shown in Figure 5, the supporting portion 9 extends along the main direction of extension 6 between a relative supporting end 32 connected to the growing platform 7 and a relative connecting end 33 connected to the rest of the movement means 8. In that way, during use, the growing platform 7 moves together with the supporting portion 9.

The growing platform 7 is coupled to the supporting portion 9 by a reversible coupling unit.

It should be noticed that, during the second operating condition, the supporting portion 9 extends inside the growing cavity 5, whilst during the first operating condition the supporting portion 9 extends inside the narrowed growing cavity 5. In other words, during the first operating condition, the supporting portion 9 extends inside the annular base body 19.

Moreover, the machine 1 comprises sealing means 34 positioned around the supporting portion 9 and abutting the inner surface of the annular base body 19 to form a seal between the supporting portion 9 and the annular base body 19. Said sealing means 34 comprise at least one seat made in the supporting portion 9 and extending annularly around it, and a respective annular gasket mounted in the seat.

Moreover, the supporting portion 9 is interchangeable for adapting to the narrowing of the growing cavity 5. For example, during the first operating condition, the supporting portion 9 is shaped to match the inner surface of the annular base body 19. During the second operating condition, the supporting portion 9 is shaped to match the inner surface of the growing cavity 5.

It should be noticed that the term "annular base body 19" refers to a body with any form having a shape which surrounds an inner area. In other words, the annular base body 19 may have any shape, for example circular, square, hexagonal, rhomboid, etc. Preferably, the annular base body 19 has a circular shape. Obviously, the periphery of the growing platform 7 is shaped to match the annular base body 19 during the second operating condition.

In addition, the supporting portion 9 has an outer shape which is, at least partly, cylindrical and shaped to match the annular base body 19. In other words, the inner surface of the annular base body 19 is cylindrical. It should be noticed that the movement means 8 comprise anti-rotational means 35 interposed between the supporting portion 9 and the annular base body 19 for preventing the rotation of the supporting portion 9 relative to the annular base body 19.

In fact, during the movement of the growing platform 7 and of the related supporting portion 9 a rotary movement could be produced (if the supporting portion 9 has a cylindrical outer shape which is shaped to match the inner surface of the cylindrical annular base body 19) between the growing platform 7 and the supporting portion 9. Therefore, the anti-rotational means 35 are used to eliminate any rotary components of movement which may arise between the growing platform 7 and the supporting portion 9.

In particular, the anti-rotational means 35 are formed by a first flat surface of the inner surface of the annular body and by a second flat surface of the outer surface of the supporting portion 9. Said first flat surface and said second flat surface being in sliding contact with each other.

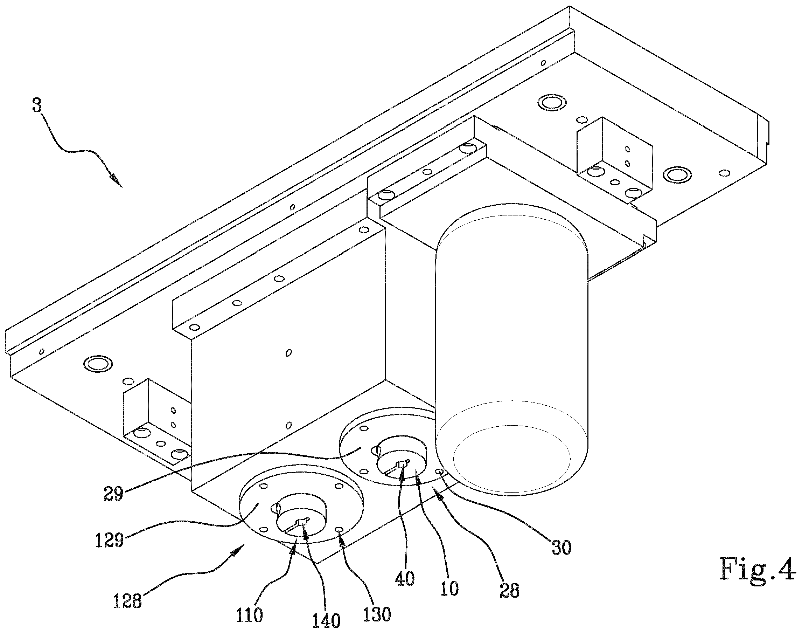

Preferably, Figure 4 shows how the anti-rotational means 35 comprise a through slot 36 made in the lateral wall of the annular base body 19 and a plate 37 mounted in said through slot 36 and fixed to the annular body. The plate 37 forms, inside the annular body, the first flat surface.

As already indicated, the movement means 8 comprise release means 10 interposed between the supporting portion 9 and the rest of the movement means 8 for allowing the extraction of the annular base body 19. Moreover, the movement means 8 comprise a worm screw 38 extending between a relative first portion operatively connected to the growing platform 7 and a relative second portion operatively engaged with a gear wheel. The gear wheel is connected to an electric motor 39 (which is also part of the movement means 8) for moving the worm screw 38.

In detail, Figure 4 shows how the release means 10 comprise a connecting hole 40 made in the supporting portion 9 at the connecting end 33 in which part of the first portion of the worm screw 38 is inserted. Moreover, the release means 10 comprise a fixing bolt operatively associated with the connecting hole 40 for locking the worm screw 38 in position.

In that way, during operation of the machine 1, the movement of the worm screw 38 along the main direction of extension 6 moves the supporting portion 9 and consequently the growing platform 7.

Moreover, the main body 3 of the machine 1 is slidable relative to the worm screw 38 and to the motor in a direction perpendicular to the main direction of extension 6. In particular, the main body 3 is movable between an operating condition in which it is positioned close to a motor-driven part of the movement means 8 and a home condition in which it is spaced from the motor-driven part of the movement means 8 in such a way as to associate or disassociate the annular body relative to the growing cavity 5. Preferably, said motor-driven part of the movement means 8 comprises the worm screw 38 and the electric motor 39.

Figure 1 shows how the supporting structure 2 comprises two supports 41 on which the main body 3 is slidably mounted.

In use, observing the machine 1 from the front, the main direction of extension 6 of the growing cavity 5 extends substantially vertically and the working surface 4 is substantially horizontal. In that viewpoint, the electromagnetic radiation device 18 is positioned above the main body 3 and the movement means 8 are positioned below the main body 3. Precisely, the mounting end 21 of the growing cavity 5 is positioned below the main body 3.

In other words, the movement means 8, the main body 3 and the electromagnetic radiation device 18 are vertically superposed from the bottom up.

Therefore, to extract the annular base body 19 from the growing cavity 5, the main body 3 must be offset from the motor-driven part of the movement means 8.

Obviously, before moving the main body 3 from the operating condition to the home condition, the supporting portion 9 must be released from the rest of the movement means 8 using the release means 10.

According to this invention, the machine 1 comprises an annular containment body 42 which can be operatively associated with the containment cavity 12 of the main body 3 for forming a narrowing of the containment cavity 12. In particular, the containment platform 14 is interchangeable for adapting to said narrowing of the containment cavity 12.

It should be noticed that the annular containment body 42 has similar features to those of the annular base body 19. Therefore, all of the features previously described with reference to the annular base body 19 also apply regarding the annular containment body 42.

In other words, the annular base body 42 is formed by its lateral wall which has a predetermined thickness. Said thickness of the lateral wall defines the narrowing of the containment cavity 12.

In particular, during the machine 1 first operating condition the annular base body 19 is inserted in the growing cavity 5 and the annular containment body 42 is inserted in the containment cavity 12. In contrast, in the second operating condition the annular base body 19 is removed from the growing cavity 5 (Figures 2 and 8) and the annular containment body 42 is removed from the containment cavity 12.

In particular, the containment cavity 12 comprises an inner surface and the annular containment body 42 comprises an outer surface which is shaped to match the inner surface of the containment cavity 12.

In that way, during the first operating condition, the outer surface of the annular containment body 42 is in contact with the inner surface of the containment cavity 12 (Figure 5).

Preferably, the interchangeable containment platform 14 is shaped to match the containment cavity 12 of the main body 3 or the narrowing of the containment cavity 12 depending on the machine 1 operating condition.

For example, if the machine 1 is in the first operating condition the containment platform 14 is shaped to match an inner surface of the annular containment body 42 (Figure 5). If the machine 1 is in the second operating condition the containment platform 14 is shaped to match the containment cavity 12 (Figure 8).

It should be noticed that the interchangeable containment platform 14 is shaped to match the containment cavity 12 of the main body 3 or the narrowing of the containment cavity 12 with reference to a direction orthogonal to the principal direction of extension 13. In other words, the interchangeable containment platform 14 adheres laterally to the inner surface of the containment cavity 12 or to the inner surface of the annular containment body 42 in such a way as to avoid the passage of powdered materials from the containment platform 14 to a rear part of it.

Moreover, Figures 5 and 8 show how the containment cavity 12 of the main body 3 forms a channel passing through the main body 3 and extending along the principal direction of extension 13 between an inlet end 120 of the powdered materials and a mounting end 121 for mounting the annular containment body 42, opposite to the inlet end 120. In particular, the inlet end 120 of the containment cavity 12 is positioned at the working surface 4 and is level with it. It should be noticed that the annular containment body 42 is inserted in the containment cavity 12 through the mounting end 121 during the passage from the second operating condition to the first operating condition.

Similarly, the annular containment body 42 forms an internal through channel extending from an inlet opening 122 for the powdered materials and a connection opening 123 for the movement means 8. In that way, during the first operating condition, the inlet opening 122 is positioned at the inlet end 120 of the containment cavity 12, and the connection opening 123 is positioned at the mounting end 121 of the containment cavity 12.

In addition, the annular containment body 42 comprises a pierced upper apron 124 forming the inlet opening 122. Preferably, said apron 124 is shaped to match the containment cavity 12. In addition, the apron 124 is connected to the rest of the annular containment body 42 by connecting means 125 (Figure 7). The connecting means 125 comprise at least one hollow 126 made in the outer surface of the annular containment body 42, at least one connecting hole 127 extending from the hollow 126 towards the inlet opening 122 and at least one connecting screw 128 which is screwed into the connecting hole 127 for connecting the apron 124 to the rest of the containment body 12.

Moreover, the depositing means 11 comprises fastening means 128 interposed between the annular containment body 42 and the main body 3 for fixing the annular containment body 42 to the main body 3. Preferably, as shown in Figure 3, the fastening means 128 comprise a flange 129 of the annular containment body 42 formed at the connection opening 123. Said flange 129 extends outwards relative to the principal direction of extension 13.

Moreover, the flange 129 comprises a plurality of through holes 130 (part of the fastening means 128) and the main body 3 comprises respective threaded holes 131 (part of the fastening means 128) which, in use, are aligned with the through holes of the flange 129. In other words, the threaded holes 131 are aligned with the through holes 130 of the flange 129 during the first operating condition. In addition, the fastening means 128 comprise screws which can be inserted in the through holes 130 of the flange 129 and screwed into the threaded holes 131 of the main body 3 for connecting the annular containment body 42 to the main body 3. Moreover, the movement means 8 comprise a supporting portion 109 of the containment platform 14 extending in the containment cavity 12 through the mounting end 121 and connected to the rest of the movement means 108 for transmitting motion to the containment platform 14. In particular, as shown in Figure 5, the supporting portion 109 extends along the principal direction of extension 13 between a relative supporting end 132 connected to the containment platform 14 and a relative connecting end 133 connected to the rest of the movement means 8. In that way, during use, the containment platform 14 moves together with the supporting portion 109.

The containment platform 14 is coupled to the supporting portion 109 by a reversible coupling unit.

It should be noticed that, during the second operating condition, the supporting portion 109 extends inside the containment cavity 12, whilst during the first operating condition the supporting portion 109 extends inside the narrowed containment cavity 12. In other words, during the first operating condition, the supporting portion 109 extends inside the annular containment body 42.

Moreover, the depositing means 11 comprise sealing means 134 positioned around the supporting portion 109 and abutting the inner surface of the annular containment body 42 to form a seal between the supporting portion 109 and the annular containment body 42. Said sealing means 34 comprise at least one seat made in the supporting portion 9 and extending annularly around it, and a respective annular gasket mounted in the seat.

Moreover, the supporting portion 109 is interchangeable for adapting to the narrowing of the containment cavity 12. For example, during the first operating condition, the supporting portion 109 is shaped to match the inner surface of the annular containment body 42. During the second operating condition, the supporting portion 109 is shaped to match the inner surface of the containment cavity 12.

It should be noticed that the term "annular containment body 42" refers to a body with any form having a shape which surrounds an inner area. In other words, the annular containment body 42 may have any shape, for example circular, square, hexagonal, rhomboid, etc. Preferably, the annular containment body 42 has a circular shape. Obviously, the periphery of the containment platform 14 is shaped to match the annular base body 9 during the second operating condition.

In addition, the supporting portion 109 has an outer shape which is, at least partly, cylindrical and shaped to match the annular containment body 42. In other words, the inner surface of the annular containment body 42 is cylindrical. It should be noticed that the movement means 108 comprise anti-rotational means 135 interposed between the supporting portion 109 and the annular containment body 42 for preventing the rotation of the supporting portion 109 relative to the annular containment body 42.

In fact, during the movement of the containment platform 14 and of the related supporting portion 109 a rotary movement could be produced (if the supporting portion 109 has a cylindrical outer shape which is shaped to match the inner surface of the cylindrical annular containment body 42) between the containment platform 14 and the supporting portion 109. Therefore, the anti-rotational means 135 are used to eliminate any rotary components of movement which may arise between the containment platform 14 and the supporting portion 109.

In particular, the anti-rotational means 135 are formed by a first flat surface of the inner surface of the annular body and by a second flat surface of the outer surface of the supporting portion 109. Said first flat surface and said second flat surface being in sliding contact with each other.

Preferably, Figure 4 shows how the anti-rotational means 135 comprise a through slot 136 made in the lateral wall of the annular containment body 42 and a plate 137 mounted in said through slot 136 and fixed to the annular body. The plate 137 forms, inside the annular body, the first flat surface.

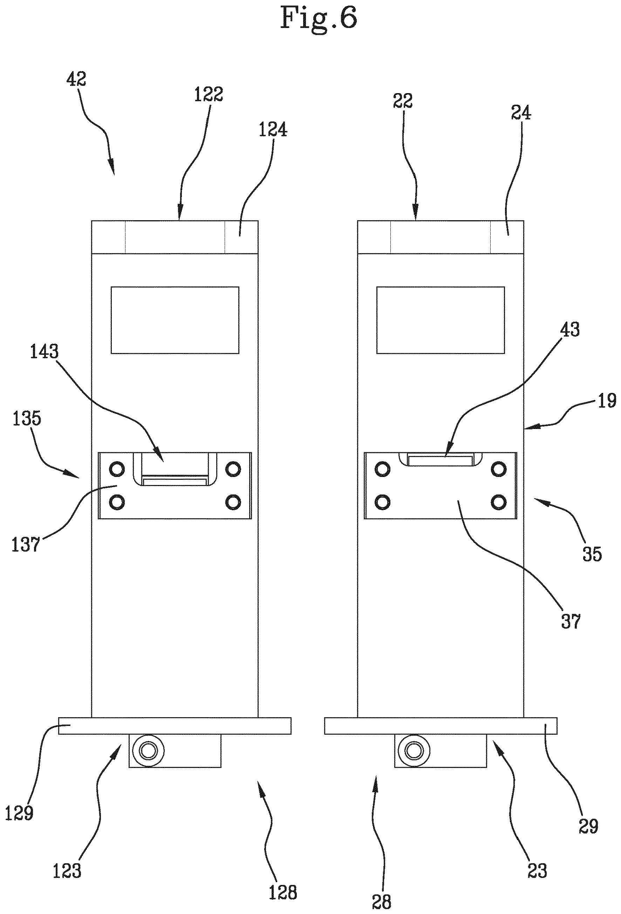

Moreover, Figure 6 shows how the plate 137 of the annular containment body 42 and the plate 37 of the annular base body 19, each comprise a through slit 143, 43 at an upper side of the respective plate 37. Advantageously, said through slit 43 causes an increase in the stroke (in the opposite direction to the inlet opening 22) of the supporting portion 9 inside the respective annular body.

In addition, Figure 6 shows how the slit 143 of the plate 37 of the annular containment body 42 is larger than the slit 43 of the plate 37 of the annular base body 19. In fact, the powdered materials stored in the containment cavity 12 occupy more space than that occupied in the growing cavity 5, since in the latter part of the powdered materials have been fused together.

Consequently, it is advantageous that the stroke (in the opposite direction to the inlet opening 122) of the supporting portion 109 of the annular containment body 42 is greater than the stroke of the supporting portion 109 of the annular containment body 42.

For the same reasons, as shown in Figure 5, the growing platform 7 has a thickness (measured along the main direction of extension 6) which is greater than the thickness of the containment platform 14 (measured along the principal direction of extension 13).

As already indicated, the movement means 108 comprise release means 110 interposed between the supporting portion 109 and the rest of the movement means 108 for allowing the extraction of the annular containment body 42.

Moreover, the movement means 108 comprise a worm screw 138 extending between a relative first portion operatively connected to the containment platform 14 and a relative second portion operatively engaged with a gear wheel. The gear wheel is connected to an electric motor 139 (which is also part of the movement means 108) for moving the worm screw 138.

In detail, Figure 4 shows how the release means 110 comprise a connecting hole 140 made in the supporting portion 109 at the connecting end 133 in which part of the first portion of the worm screw 138 is inserted. Moreover, the release means 110 comprise a fixing bolt operatively associated with the connecting hole 140 for locking the worm screw 138 in position.

In that way, during operation of the machine 1, the movement of the worm screw 138 along the principal direction of extension 13 moves the supporting portion 109 and consequently the containment platform 14.

As already indicated, the main body 3 of the machine 1 is slidable relative to the worm screw 138 and to the motor 139 in a direction perpendicular to the principal direction of extension 13. In that way, it is also possible to associate or disassociate the annular body relative to the containment cavity 12 during the home position.

Again in this case, before moving the main body 3 from the operating condition to the home condition, the supporting portion 109 must be released from the rest of the movement means 108 using the release means 110.

Moreover, the machine 1 comprises a collection cavity 44 for collecting the powdered materials which is made in the working surface 4 and positioned after the containment cavity 12 and the growing cavity 5 for collecting the remnants of powdered materials. In fact, during the movement of the trowel 15 beyond the growing cavity 5, the powdered materials conveyed by the trowel 15 and not poured into the growing chamber are collected in the collection cavity 44. Advantageously, the collection cavity 44 comprises a mouth whose width is equal to the length of the trowel 15 in such a way that it can collect the largest possible quantity of powdered materials. The collection cavity 44 is not described in more detail below, since it is of the type known in the sector of sintering machines.

As regards operation of the machine 1, it is derived directly from the description above.

In particular, depending on the dimensions of the object to be made, the annular base body 19 may or may not be inserted in the growing cavity 5 and the annular containment body 42 in the containment cavity 12.

In particular, to insert or remove each annular body in/from the respective cavity, it is necessary to uncouple (using the release means 10) the supporting portion 9 from the rest of the movement means 8, and to move the main body 3 relative to said rest of the movement means 8. In that position, in the part below the main body 3 there is a free area which allows the operations of insertion or removal of each annular body in/from the respective cavity.

This invention achieves the preset aims.

In particular, this invention allows the variation of the quantity of powdered materials to be used for sintering depending on the dimensions of the object to be made. In fact, insertion of the annular base body allows a reduction in the space of the growing cavity and therefore a reduction in the quantity of powder needed to make the object.

In that way, this invention reduces wasted remaining powder in the growing cavity after the sintering process, since a quantity of powder suited to the dimensions of the object to be made is used.

Moreover, this invention also cuts the costs of making three-dimensional objects, in particular precious objects, by sintering.

It should also be noticed that this invention is relatively easy to produce and that even the cost connected with implementing the invention is not very high.

## Claims

1. A machine (1) for making three-dimensional objects from powdered materials, comprising:
a main body (3) having a growing cavity (5) extending along a main direction of extension (6);
a growing platform (7) for growing the object to be produced, slidably inserted in the growing cavity (5) of the main body (3) and movable along said main direction of extension (6) between a plurality of operating positions;
movement means (8) for moving the growing platform (7);
depositing means (11) operatively associated with the growing cavity (5) for depositing a succession of layers of powdered materials on the growing platform (7);
an electromagnetic radiation device (18) designed for focusing a beam of electromagnetic radiation on predetermined zones of each layer of deposited powder until joining together of the granules of powdered materials is achieved;
an annular base body (19) which can be operatively associated with the growing cavity (5) of the main body (3) for forming a narrowing of said growing cavity (5); said growing platform (7) being interchangeable for adapting to said narrowing of the growing cavity (5); said machine being configurable between a first operating condition in which the annular base body (19) is inserted in the growing cavity (5) and a second operating condition in which the annular base body (19) is removed from the growing cavity (5);
**characterised in that** the growing cavity (5) of the main body (3) forms a channel passing through the main body (3) and extending along the main direction of extension (6) between an inlet end (20) of the powdered materials and a mounting end (21) for mounting the annular base body (19) opposite to the inlet end (20); said annular base body (19) being insertable in the growing cavity (5) through the mounting end (21) during the passage from the second operating condition to the first operating condition; said machine (1) comprising fastening means (28) interposed between the annular base body (19) and the mounting end (21) of the main body (3) for fixing the annular base body (19) to the main body (3).

2. The machine (1) according to claim 1, **characterised in that** the annular base body (19) forms an internal through channel extending from an inlet opening (22) for the powdered materials and a connection opening (23) for the movement means (8); said annular base body (19) having, during the first operating condition, the inlet opening (22) positioned at the inlet end (20) of the growing cavity (5), and the connection opening (23) positioned at the mounting end (21) of the growing cavity (5).

3. The machine (1) according to claim 2, **characterised in that** the fastening means (28) comprise a flange (29) of the annular base body (19) formed at the connection opening (23); said flange (29) extending outwards from the annular base body (19) relative to the main direction of extension (6) and being connected at the mounting end (21) for fixing the annular base body (19) to the main body (3).

4. The machine (1) according to claim 3, **characterised in that** the fastening means (28) comprise a plurality of through holes (30) made in the flange (29) and respective threaded holes (31) made in the main body (3) which in use are aligned with the through holes in the flange (29); said fastening means (28) comprising screws inserted in the through holes (30) in the flange (29) and screwed into the threaded holes (31) of the main body (3) for connecting the annular base body (19) to the main body (3).

5. The machine (1) according to any one of claims 2 to 4, **characterised in that** the inlet end (20) of the growing cavity (5) is positioned at the working surface (4) and is level with it.

6. The machine (1) according to claim 5, **characterised in that** the inlet opening (22) of the annular base body (19) is positioned at the working surface (4) and is level with it.

7. The machine (1) according to claim 6, **characterised in that** the annular base body (19) comprises a pierced upper apron (24) forming the inlet opening (22); said apron (24) being shaped to match the growing cavity (5) and being connected to the rest of the annular base body (19) by connecting means (25).

8. The machine (1) according to any one of the preceding claims, **characterised in that** the interchangeable growing platform (7) is shaped to match the growing cavity (5) of the main body (3) or said narrowing of the growing cavity (5) depending on the machine (1) operating condition.

9. The machine (1) according to any one of the preceding claims, **characterised in that** the movement means (8) comprise a supporting portion (9) of the growing platform (7) extending in the growing cavity (5) and connected to the rest of the movement means (8) for transmitting motion to the growing platform (7); said supporting portion (9) being interchangeable for adapting to said narrowing of the growing cavity (5).

10. The machine (1) according to claim 9, **characterised in that** the movement means (8) comprise release means (10) interposed between the supporting portion (9) and the rest of the movement means (8) for allowing the extraction of the annular base body (19).

11. The machine (1) according to claim 9 or 10, **characterised in that** the annular base body (19) forms an inner surface which is, at least partly, cylindrical; said supporting portion (9) having an outer shape which is, at least partly, cylindrical, shaped to match the annular base body (19); said movement means (8) comprising anti-rotational means (35) interposed between the supporting portion (9) and the annular base body (19) for preventing the rotation of the supporting portion (9) relative to the annular base body (19).

12. The machine (1) according to claim 11, **characterised in that** the anti-rotational means (35) are formed by a first flat surface of the inner surface of the annular body and by a second flat surface of the outer surface of the supporting portion (9); said first flat surface and said second flat surface being in sliding contact with each other.

13. The machine (1) according to any one of the preceding claims, **characterised in that** the main body (3) can slide relative to at least part of the movement means (8) in a direction transversal to the main direction of extension (6); said main body (3) being movable between an operating condition in which it is positioned close to a motor-driven part of the movement means (8) and a home condition in which it is spaced from the motor-driven part of the movement means (8) in such a way as to associate or disassociate the annular body relative to the growing cavity (5).

14. The machine (1) according to any one of the preceding claims, **characterised in that** the movement means (8) comprise a worm screw (38) extending between a relative first portion operatively connected to the growing platform (7) and a relative second portion operatively engaged with a gear wheel; said gear wheel being connected to an electric motor (39) for moving the worm screw (38).

15. The machine (1) according to any one of the preceding claims, **characterised in that** the depositing means (11) comprise:
a containment cavity (12) for containing the powdered materials made in the main body (3);
a containment platform (14) for containing the powdered materials, slidably inserted in the containment cavity (12) of the main body (3) and movable between a plurality of operating positions;
movement means (108) for moving the containment platform (14);
a trowel (15) movable from the containment cavity (12) to the growing cavity (5), along a direction transversal to the main direction of extension (6), for transferring the powdered materials from the containment cavity (12) to the growing cavity (5);
an annular containment body (42) which can be operatively associated with the containment cavity (12) of the main body (3) for forming a narrowing of the containment cavity (12); said containment platform (14) being interchangeable for adapting to said narrowing of the containment cavity (12).

## Patentansprüche

1. Maschine (1) zum Herstellen dreidimensionaler Objekte aus pulverförmigen Materialien, umfassend:
einen Hauptkörper (3), der einen Wachstumshohlraum (5) aufweist, der sich entlang einer Haupterstreckungsrichtung (6) erstreckt;
eine Wachstumsplattform (7) zum Wachsenlassen des herzustellenden Objekts, die in den Wachstumshohlraum (5) des Hauptkörpers (3) eingeschoben wird und entlang der Haupterstreckungsrichtung (6) zwischen mehreren Betriebspositionen beweglich ist;
Bewegungsmittel (8) zum Bewegen der Wachstumsplattform (7);
Abscheidemittel (11), die dem Wachstumshohlraum (5) wirkzugeordnet sind, zum Abscheiden einer Folge von Schichten pulverförmiger Materialien auf der Wachstumsplattform (7);
eine elektromagnetische Strahlungsvorrichtung (18), die zum Fokussieren eines Strahls elektromagnetischer Strahlung auf vorgegebene Bereiche jeder Schicht abgeschiedenen Pulvers, bis ein Verbinden der Körnchen pulverförmiger Materialien erreicht ist, ausgestaltet ist;
einen ringförmigen Grundkörper (19), der dem Wachstumshohlraum (5) des Hauptkörpers (3) wirkzugeordnet werden kann, zum Ausbilden einer Verengung des Wachstumshohlraums (5); wobei die Wachstumsplattform (7) auswechselbar ist, um sich der Verengung des Wachstumshohlraums (5) anzupassen; wobei die Maschine zwischen einem ersten Betriebszustand, in dem der ringförmige Grundkörper (19) in den Wachstumshohlraum (5) eingeführt ist, und einem zweiten Betriebszustand, in dem der ringförmige Grundkörper (19) aus dem Wachstumshohlraum (5) entfernt ist, umgestaltbar ist;
**dadurch gekennzeichnet, dass** der Wachstumshohlraum (5) des Hauptkörpers (3) einen Kanal ausbildet, der durch den Hauptkörper (3) verläuft und sich entlang der Haupterstreckungsrichtung (6) zwischen einem Einlassende (20) der pulverförmigen Materialien und einem Einbauende (21) zum Einbauen des ringförmigen Grundkörpers (19) gegenüber dem Einlassende (20) erstreckt; wobei der ringförmige Grundkörper (19) während des Übergangs von dem zweiten Betriebszustand in den ersten Betriebszustand durch das Einbauende (21) hindurch in den Wachstumshohlraum (5) einführbar ist; wobei die Maschine (1) Befestigungsmittel (28) umfasst, die zwischen dem ringförmigen Grundkörper (19) und dem Einbauende (21) des Hauptkörpers (3) angeordnet sind, um den ringförmigen Grundkörper (19) an dem Hauptkörper (3) zu befestigen.

2. Maschine (1) nach Anspruch 1, **dadurch gekennzeichnet, dass** der ringförmige Grundkörper (19) einen inneren Durchgangskanal, der sich von einer Einlassöffnung (22) für die pulverförmigen Materialien aus erstreckt, und eine Verbindungsöffnung (23) für die Bewegungsmittel (8) ausbildet; wobei der ringförmige Grundkörper (19) während des ersten Betriebszustands, die Einlassöffnung (22) an dem Einlassende (20) des Wachstumshohlraums (5) positioniert und die Verbindungsöffnung (23) an dem Einbauende (21) des Wachstumshohlraums (5) positioniert aufweist.

3. Maschine (1) nach Anspruch 2, **dadurch gekennzeichnet, dass** die Befestigungsmittel (28) einen Flansch (29) des ringförmigen Grundkörpers (19) umfassen, der an der Verbindungsöffnung (23) ausgebildet ist; wobei der Flansch (29) sich bezogen auf die Haupterstreckungsrichtung (6) von dem ringförmigen Grundkörper (19) aus nach außen erstreckt und an dem Einbauende (21) verbunden ist, um den ringförmigen Grundkörper (19) an dem Hauptkörper (3) zu befestigen.

4. Maschine (1) nach Anspruch 3, **dadurch gekennzeichnet, dass** die Befestigungsmittel (28) mehrere Durchgangslöcher (30), die in dem Flansch (29) hergestellt sind, und entsprechende Gewindelöcher (31), die in dem Hauptkörper (3) hergestellt sind und bei Benutzung mit den Durchgangslöchern in dem Flansch (29) ausgerichtet sind, umfassen; wobei die Befestigungsmittel (28) Schrauben umfassen, die in die Durchgangslöcher (30) in dem Flansch (29) eingeführt und in die Gewindelöcher (31) des Hauptkörpers (3) geschraubt sind, um den ringförmigen Grundkörper (19) mit dem Hauptkörper (3) zu verbinden.

5. Maschine (1) nach einem der Ansprüche 2 bis 4, **dadurch gekennzeichnet, dass** das Einlassende (20) des Wachstumshohlraums (5) an der Arbeitsfläche (4) angeordnet ist und mit dieser fluchtet.

6. Maschine (1) nach Anspruch 5, **dadurch gekennzeichnet, dass** die Einlassöffnung (22) des ringförmigen Grundkörpers (19) an der Arbeitsfläche (4) angeordnet ist und mit dieser fluchtet.

7. Maschine (1) nach Anspruch 6, **dadurch gekennzeichnet, dass** der ringförmige Grundkörper (19) einen gelochten oberen Aufsatz (24) umfasst, der die Einlassöffnung (22) ausbildet; wobei der Aufsatz (24) so geformt ist, dass er dem Wachstumshohlraum (5) entspricht, und durch Verbindungsmittel (25) mit dem Rest des ringförmigen Grundkörpers (19) verbunden ist.

8. Maschine (1) nach einem der vorhergehenden Ansprüche, **dadurch gekennzeichnet, dass** die auswechselbare Wachstumsplattform (7) so geformt ist, dass sie abhängig vom Betriebszustand der Maschine (1) dem Wachstumshohlraum (5) des Hauptkörpers (3) oder der Verengung des Wachstumshohlraums (5) entspricht.

9. Maschine (1) nach einem der vorhergehenden Ansprüche, **dadurch gekennzeichnet, dass** die Bewegungsmittel (8) einen Tragabschnitt (9) der Wachstumsplattform (7) umfassen, der sich in dem Wachstumshohlraum (5) erstreckt und mit dem Rest der Bewegungsmittel (8) verbunden ist, um Bewegung auf die Wachstumsplattform (7) zu übertragen; wobei der Tragabschnitt (9) auswechselbar ist, um sich an die Verengung des Wachstumshohlraums (5) anzupassen.

10. Maschine (1) nach Anspruch 9, **dadurch gekennzeichnet, dass** die Bewegungsmittel (8) Freigabemittel (10) umfassen, die zwischen dem Tragabschnitt (9) und dem Rest der Bewegungsmittel (8) angeordnet sind, um das Herausziehen des ringförmigen Grundkörpers (19) zu gestatten.

11. Maschine (1) nach Anspruch 9 oder 10, **dadurch gekennzeichnet, dass** der ringförmige Grundkörper (19) eine innere Oberfläche ausbildet, die mindestens teilweise zylindrisch ist; wobei der Tragabschnitt (9) eine äußere Form aufweist, die mindestens teilweise zylindrisch und so geformt ist, dass sie dem ringförmigen Grundkörper (19) entspricht; wobei die Bewegungsmittel (8) Verdrehungsschutzmittel (35) umfassen, die zwischen dem Tragabschnitt (9) und dem ringförmigen Grundkörper (19) angeordnet sind, um die Drehung des Tragabschnitts (9) bezogen auf den ringförmigen Grundkörper (19) zu verhindern.

12. Maschine (1) nach Anspruch 11, **dadurch gekennzeichnet, dass** die Verdrehungsschutzmittel (35) durch eine erste flache Oberfläche der inneren Oberfläche des ringförmigen Körpers und durch eine zweite flache Oberfläche der äußeren Oberfläche des Tragabschnitts (9) ausgebildet sind; wobei die erste flache Oberfläche und die zweite flache Oberfläche in Gleitkontakt miteinander stehen.

13. Maschine (1) nach einem der vorhergehenden Ansprüche, **dadurch gekennzeichnet, dass** der Hauptkörper (3) bezogen auf mindestens einen Teil der Bewegungsmittel (8) in einer Richtung quer zur Haupterstreckungsrichtung (6) gleiten kann; wobei der Hauptkörper (3) zwischen einem Betriebszustand, in dem er nahe einem motorbetriebenen Teil der Bewegungsmittel (8) angeordnet ist, und einem Grundzustand, in dem er von dem motorbetriebenen Teil der Bewegungsmittel (8) beabstandet ist, derart beweglich ist, dass er den ringförmigen Körper dem Wachstumshohlraum (5) zuordnet oder diese Zuordnung aufhebt.

14. Maschine (1) nach einem der vorhergehenden Ansprüche, **dadurch gekennzeichnet, dass** die Bewegungsmittel (8) eine Schneckenschraube (38) umfassen, die sich zwischen einem relativen ersten Abschnitt, der mit der Wachstumsplattform (7) wirkverbunden ist, und einem relativen zweiten Abschnitt, der mit einem Getrieberad wirkverbunden ist, erstreckt; wobei das Getrieberad mit einem Elektromotor (39) verbunden ist, um die Schneckenschraube (38) zu bewegen.

15. Maschine (1) nach einem der vorhergehenden Ansprüche, **dadurch gekennzeichnet, dass** die Abscheidemittel (11) umfassen:
einen Aufnahmehohlraum (12) zum Aufnehmen der pulverförmigen Materialien, der in dem Hauptkörper (3) hergestellt ist;
eine Aufnahmeplattform (14) zum Aufnehmen der pulverförmigen Materialien, die in den Aufnahmehohlraum (12) des Hauptkörpers (3) eingeschoben wird und zwischen mehreren Betriebspositionen beweglich ist;
Bewegungsmittel (108) zum Bewegen der Aufnahmeplattform (14);
eine Kelle (15), die entlang einer Richtung quer zur Haupterstreckungsrichtung (6) aus dem Aufnahmehohlraum (12) in den Wachstumshohlraum (5) beweglich ist, um die pulverförmigen Materialien aus dem Aufnahmehohlraum (12) in den Wachstumshohlraum (5) zu verbringen;
einen ringförmigen Aufnahmekörper (42), der dem Aufnahmehohlraum (12) des Hauptkörpers (3) wirkzugeordnet werden kann, zum Ausbilden einer Verengung des Aufnahmehohlraums (12); wobei die Aufnahmeplattform (14) auswechselbar ist, um sich an die Verengung des Aufnahmehohlraums (12) anzupassen.

## Revendications

1. Machine (1) destinée à fabriquer des objets tridimensionnels à partir de matières en poudre, ladite machine comprenant :
un corps principal (3) comportant une cavité de croissance (5) qui s'étend dans une direction d'extension principale (6) ;
une plate-forme de croissance (7) destinée à la croissance de l'objet à produire, insérée de manière coulissante dans la cavité de croissance (5) du corps principal (3) et mobile dans ladite direction d'extension principale (6) entre une pluralité de positions de fonctionnement ;
des moyens de déplacement (8) destinés à déplacer la plate-forme de croissance (7) ;
des moyens de dépôt (11) associés fonctionnellement à la cavité de croissance (5) pour déposer une succession de couches de matières en poudre sur la plate-forme de croissance (7) ;
un dispositif de rayonnement électromagnétique (18) conçu pour focaliser un faisceau de rayonnement électromagnétique sur des zones prédéterminées de chaque couche de poudre déposée jusqu'à ce que l'agglomération des granulés de matières en poudre soit effectuée ;
un corps de base annulaire (19) qui peut être associé fonctionnellement à la cavité de croissance (5) du corps principal (3) pour former un rétrécissement de ladite cavité de croissance (5) ; ladite plate-forme de croissance (7) étant interchangeable pour s'adapter audit rétrécissement de la cavité de croissance (5) ; ladite machine étant configurable entre un premier état de fonctionnement dans lequel le corps de base annulaire (19) est inséré dans la cavité de croissance (5) et un second état de fonctionnement dans lequel le corps de base annulaire (19) est retiré de la cavité de croissance (5) ;
**caractérisée en ce que** la cavité de croissance (5) du corps principal (3) forme un canal traversant le corps principal (3) et s'étendant dans la direction d'extension principale (6) entre une extrémité d'entrée (20) des matières en poudre et une extrémité de montage (21), destinée au montage du corps de base annulaire (19) à l'opposé de l'extrémité d'entrée (20) ; ledit corps de base annulaire (19) pouvant être inséré dans la cavité de croissance (5) à travers l'extrémité de montage (21) pendant le passage du second état de fonctionnement au premier état de fonctionnement ; ladite machine (1) comprenant des moyens de fixation (28) interposés entre le corps de base annulaire (19) et l'extrémité de montage (21) du corps principal (3) pour fixer le corps de base annulaire (19) au corps principal (3).

2. Machine (1) selon la revendication 1, **caractérisée en ce que** le corps de base annulaire (19) forme un canal traversant interne s'étendant depuis une ouverture d'entrée (22) destinée aux matières en poudre et une ouverture de connexion (23) destinée aux moyens de déplacement (8) ; ledit corps de base annulaire (19) ayant, pendant le premier état de fonctionnement, l'ouverture d'entrée (22) positionnée à l'extrémité d'entrée (20) de la cavité de croissance (5) et l'ouverture de connexion (23) positionnée à l'extrémité de montage (21) de la cavité de croissance (5).

3. Machine (1) selon la revendication 2, **caractérisée en ce que** les moyens de fixation (28) comprennent une bride (29) du corps de base annulaire (19) formée au niveau de l'ouverture de connexion (23) ; ladite bride (29) s'étendant vers l'extérieur depuis le corps de base annulaire (19) par rapport à la direction d'extension principale (6) et étant reliée à l'extrémité de montage (21) pour fixer le corps de base annulaire (19) au corps principal (3).

4. Machine (1) selon la revendication 3, **caractérisée en ce que** les moyens de fixation (28) comprennent une pluralité de trous traversants (30) ménagés dans la bride (29) et des trous filetés respectifs (31) ménagés dans le corps principal (3) qui, en utilisation, sont alignés avec les trous traversants de la bride (29) ; lesdits moyens de fixation (28) comprenant des vis insérées dans les trous traversants (30) de la bride (29) et vissées dans les trous filetés (31) du corps principal (3) pour relier le corps de base annulaire (19) au corps principal (3).

5. Machine (1) selon l'une quelconque des revendications 2 à 4, **caractérisée en ce que** l'extrémité d'entrée (20) de la cavité de croissance (5) est positionnée à la surface de travail (4) et est au niveau de celle-ci.

6. Machine (1) selon la revendication 5, **caractérisée en ce que** l'ouverture d'entrée (22) du corps de base annulaire (19) est positionnée à la surface de travail (4) et est au niveau de celle-ci.

7. Machine (1) selon la revendication 6, **caractérisée en ce que** le corps de base annulaire (19) comprend un tablier supérieur percé (24) formant l'ouverture d'entrée (22) ; ledit tablier (24) étant conformé de façon à correspondre à la cavité de croissance (5) et étant relié au reste du corps de base annulaire (19) par des moyens de connexion (25).

8. Machine (1) selon l'une quelconque des revendications précédentes, **caractérisée en ce que** la plate-forme de croissance interchangeable (7) est conformée de façon à correspondre à la cavité de croissance (5) du corps principal (3) ou audit rétrécissement de la cavité de croissance (5) en fonction de l'état de fonctionnement de la machine (1).

9. Machine (1) selon l'une quelconque des revendications précédentes, **caractérisée en ce que** les moyens de déplacement (8) comprennent une partie de support (9) de la plate-forme de croissance (7) qui s'étend dans la cavité de croissance (5) et est reliée au reste des moyens de déplacement (8) pour transmettre le mouvement à la plate-forme de croissance (7) ; ladite partie de support (9) étant interchangeable pour s'adapter audit rétrécissement de la cavité de croissance (5).

10. Machine (1) selon la revendication 9, **caractérisée en ce que** les moyens de déplacement (8) comprennent des moyens de libération (10) interposés entre la partie de support (9) et le reste des moyens de déplacement (8) pour permettre l'extraction du corps de base annulaire (19).

11. Machine (1) selon la revendication 9 ou 10, **caractérisée en ce que** le corps de base annulaire (19) forme une surface intérieure qui est au moins partiellement cylindrique ; ladite partie de support (9) ayant une forme extérieure qui est au moins partiellement cylindrique et conformée pour correspondre au corps de base annulaire (19) ; lesdits moyens de déplacement (8) comprenant des moyens anti-rotation (35) interposés entre la partie de support (9) et le corps de base annulaire (19) pour empêcher la rotation de la partie de support (9) par rapport au corps de base annulaire (19).

12. Machine (1) selon la revendication 11, **caractérisée en ce que** les moyens anti-rotation (35) sont formés par une première surface plane de la surface intérieure du corps annulaire et par une seconde surface plane de la surface extérieure de la partie de support (9) ; ladite première surface plane et ladite seconde surface plane étant en contact glissant l'une avec l'autre.

13. Machine (1) selon l'une quelconque des revendications précédentes, **caractérisée en ce que** le corps principal (3) peut glisser par rapport à au moins une partie des moyens de déplacement (8) dans une direction transversale à la direction d'extension principale (6) ; ledit corps principal (3) étant mobile entre un état de fonctionnement dans lequel il est positionné à proximité d'une partie entraînée par moteur des moyens de déplacement (8) et un état de départ dans lequel il est espacé de la partie entraînée par moteur des moyens de déplacement (8) de manière à associer ou dissocier le corps annulaire par rapport à la cavité de croissance (5).

14. Machine (1) selon l'une quelconque des revendications précédentes, **caractérisée en ce que** les moyens de déplacement (8) comprennent une vis sans fin (38) s'étendant entre une première partie relative reliée fonctionnellement à la plate-forme de croissance (7) et une seconde partie relative coopérant fonctionnellement avec une roue dentée ; ladite roue dentée étant reliée à un moteur électrique (39) pour déplacer la vis sans fin (38).

15. Machine (1) selon l'une quelconque des revendications précédentes, **caractérisée en ce que** les moyens de dépôt (11) comprennent :
une cavité de confinement (12), destinée à contenir les matières en poudre, ménagée dans le corps principal (3) ;
une plate-forme de confinement (14), destinée à contenir les matières en poudre, insérée de manière coulissante dans la cavité de confinement (12) du corps principal (3) et mobile entre une pluralité de positions de fonctionnement ;
des moyens de déplacement (108) destinés à déplacer la plate-forme de confinement (14) ;
une truelle (15) mobile depuis la cavité de confinement (12) vers la cavité de croissance (5), dans une direction transversale à la direction d'extension principale (6), pour transférer les matières en poudre depuis la cavité de confinement (12) vers la cavité de croissance (5) ;
un corps de confinement annulaire (42) qui peut être associé fonctionnellement à la cavité de confinement (12) du corps principal (3) pour former un rétrécissement de la cavité de confinement (12) ; ladite plate-forme de confinement (14) étant interchangeable pour s'adapter audit rétrécissement de la cavité de confinement (12).
